# EUROPEAN PATENT SPECIFICATION

(11) **EP 4 035 826 B1**
(45) Date of publication and mention of the grant of the patent: **23.10.2024**
(21) Application number: 21211602.4
(22) Date of filing: 01.12.2021
(51) Int. Cl.: B23Q 1/00

(54) **LOCKING DEVICE FOR WORKPIECES THAT ARE ADAPTED TO BE MACHINED ON MACHINE TOOLS**
VERRIEGELUNGSVORRICHTUNG FÜR WERKSTÜCKE, DIE ZUR BEARBEITUNG AUF WERKZEUGMASCHINEN ANGEPASST SIND
DISPOSITIF DE VERROUILLAGE POUR PIÈCES CONÇUES POUR ÊTRE USINÉES SUR DES MACHINES-OUTILS

(30) Priority: 28.01.2021 IT 202100001679
(43) Date of publication of application: 03.08.2022
(73) Proprietor: Officina Meccanica Lombarda S.r.l., 10040 Caprie TO (IT)
(72) Inventor: ROLANDI, Andrea, 27040 MONTALTO PAVESE PV (IT)
(74) Representative: Modiano, Micaela Nadia

(56) References cited:
- EP-A1- 1 952 922
- EP-A1- 3 251 796
- EP-A1- 3 741 502
- WO-A1-2012/042546
- WO-A1-2019/083623
- DE-B3- 102017 114 150

## Description

The present invention relates to a locking device for workpieces that are adapted to be machined on machine tools.

As is known, workpieces intended to be machined on machine tools can be fixed on a platform - which in turn is installed in the work area of the machine tool - by way of a series of locking devices.

In particular, each one of the locking devices can comprise a hollow cylindrical support which is fixed at right angles to the platform and is provided with retention means for receiving and axially retaining a pin which is fixed to the workpiece.

In some known systems, the retention means can comprise a triad of inserts which, on command by an irreversible clamping mechanism, can slide radially in the hollow cylindrical support between an open position, in which they free up the cavity of the hollow cylindrical support, allowing the insertion and extraction of the pin, and a closed position, in which with their inner ends they engage a circumferential groove of the pin that has been inserted in the hollow cylindrical support, so as to axially retain it.

The clamping mechanism can comprise an annular element which, by rotating about its own axis on command from a screw, interacts with the inserts with a cam action, causing their radial translation.

The conventional devices described above have a number of limitations and drawbacks, which are explained below.

The reduced contact surface between the ends of the inserts and the pin inevitably limits the maximum retaining force that can be exerted by the device.

In addition, the clamping mechanism is made up of many mechanical parts, some of which interact by slipping against each other, which entails high manufacturing costs and limitations in terms of reliability and lifetime, owing to the wear to which the mechanical parts are subjected.

Last but not least, the dimensions of the clamping mechanism on the one hand make it necessary to increase the diameter of the hollow cylindrical support, with drawbacks in terms of manufacturing costs, weight and encumbrance, while on the other hand they reduce the useful diameter for the seat of the pin and, as a consequence, the diameter of the pin and therefore its strength. This aspect is especially unwelcome because, usually, the pin is made hollow so as to coaxially accommodate the screw for fixing to the workpiece. For reasons of strength, it would therefore be desirable for the pin to have an outside diameter as wide as possible.

WO2012/042546A1 discloses a modular structure for supporting blanks, which comprises a locking device (referred to as "fixing element") according to the preamble of claim 1. In WO2012/042546A1, the claws (referred to as "jaws") have cylindrical profiles with toothed grip surfaces at their ends, which are adapted to restrainedly engage corresponding toothed portions of the pin. In addition, the jaws can be opened/closed by means of a screw, which is inserted in a through hole formed in one of the jaws and engages a threaded hole formed in the other jaw. The pin is provided with a passage for the screw, since the latter interferes with the cavity of the fixing element in which the pin is received.

The aim of the present invention is to provide a locking device for workpieces that are adapted to be machined on machine tools which, with respect to conventional systems, is capable of exerting a greater retaining force, is stronger, less subject to wear and cheaper to make, and which is capable of accommodating pins of relatively wide diameter without needing to excessively dimension the diameter of the cylindrical support.

Within this aim, an object of the present invention is to provide a device that makes it possible to manually lock/unlock the workpiece in relatively rapid times.

This aim and this and other objects, which will become clearer from the description that follows, are achieved by a locking device having the characteristics recited in the appended claim 1, while the appended dependent claims define other characteristics of the invention which are advantageous, although secondary.

Now the invention will be described in greater detail, with reference to a preferred but not exclusive embodiment thereof, which is illustrated for the purposes of non-limiting example in the accompanying drawings, wherein:
- Figure 1 is a perspective view of the locking device according to the invention;
- Figure 2 is an exploded perspective view of the locking device of Figure 1;

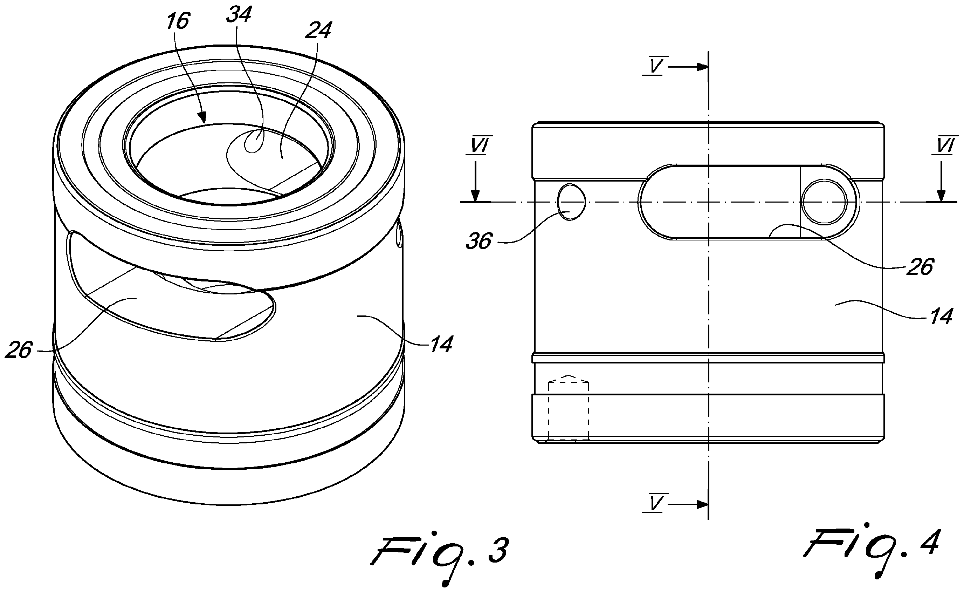

- Figure 3 is a perspective view of a first component of the locking device of Figure 1;
- Figure 4 is a side view of the component of Figure 3;
- Figure 5 is a cross-sectional view of Fig. 4 taken along the axis V-V;
- Figure 6 is a cross-sectional view of Figure 4 taken along the line VI-VI;
- Figure 7 is a side view of a second component of the locking device according to the invention;
- Figure 8 is a cross-sectional view of Figure 7 taken along the line VIII-VIII;
- Figure 9 is a perspective view of the component of Figure 7 seen from a first angle;
- Figure 10 is a perspective view of the component of Figure 7 seen from a second angle;
- Figure 11 is a partially cross-sectional side view of the locking device according to the invention;
- Figure 12 is a cross-sectional view of Figure 11 taken along the line XII-XII;
- Figure 13 is an axial cross-sectional view of the device according to the invention in the operating configuration.

With reference to the figures, the reference numeral 10 generally designates a locking device for obtained workpieces that are adapted to be machined on machine tools and machining centers.

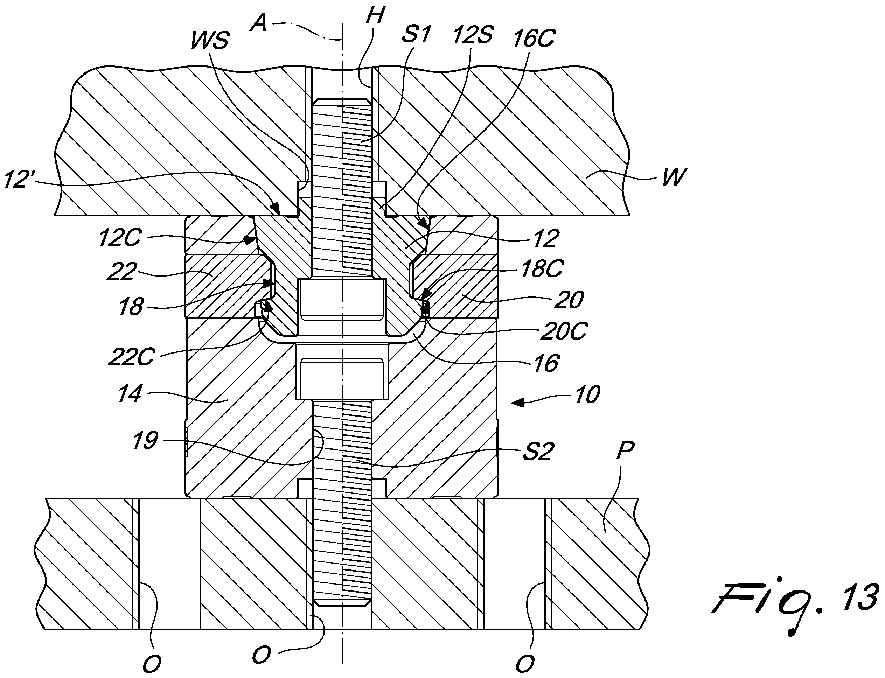

In particular, with initial reference to Figure 13, a series of locking devices 10, e.g., four locking devices, can be used for positioning and locking in place a generic workpiece W on a platform P installed in the working area of the machine tool (not shown) and conventionally provided with a grid of threaded openings O.

Each one of the locking devices 10 is adapted to receive and retain a pin 12 fixed to the workpiece W. In a manner that is conventional per se, the pin 12 can be hollow and fixed to the workpiece W by way of a first screw S1 inserted in the pin 12 and screwed into a threaded hole H that has been previously made in the workpiece W.

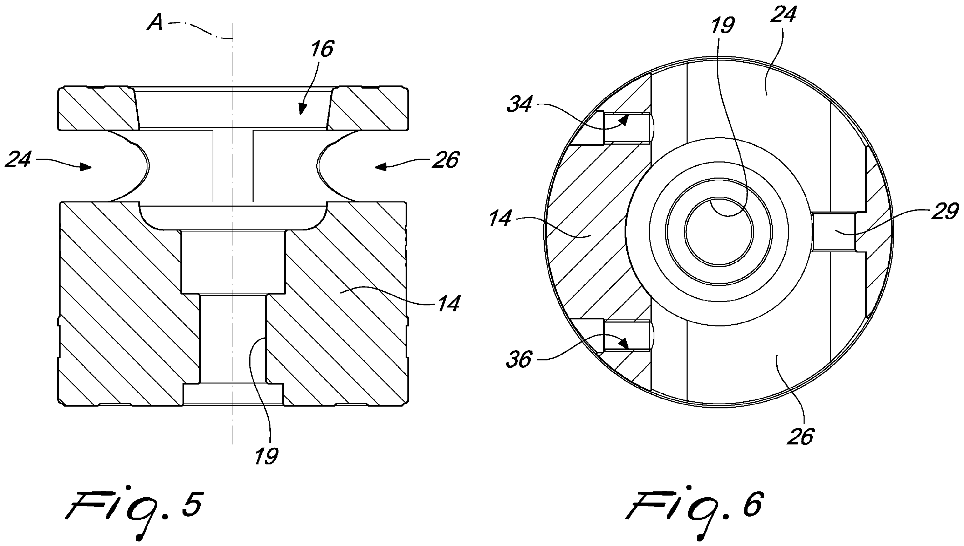

The locking device 10 comprises a support 14 extending about an axis A (Figures 5, 11 and 13), which has an axial cavity 16 for receiving the pin 12. The support 14 has a substantially cylindrical profile and is conventionally provided with retention means for retaining the pin 12 axially, by engaging a circumferential groove 18 thereof.

With particular reference to Figure 13, in a manner that is conventional per se, the support 14 is adapted to be fixed at right angles to the platform P. In this embodiment, the support 14 is fixed to the platform P with a second screw S2 which is inserted in a respective axial seat 19 of the support 14 and screwed into one of the threaded openings O of the platform P.

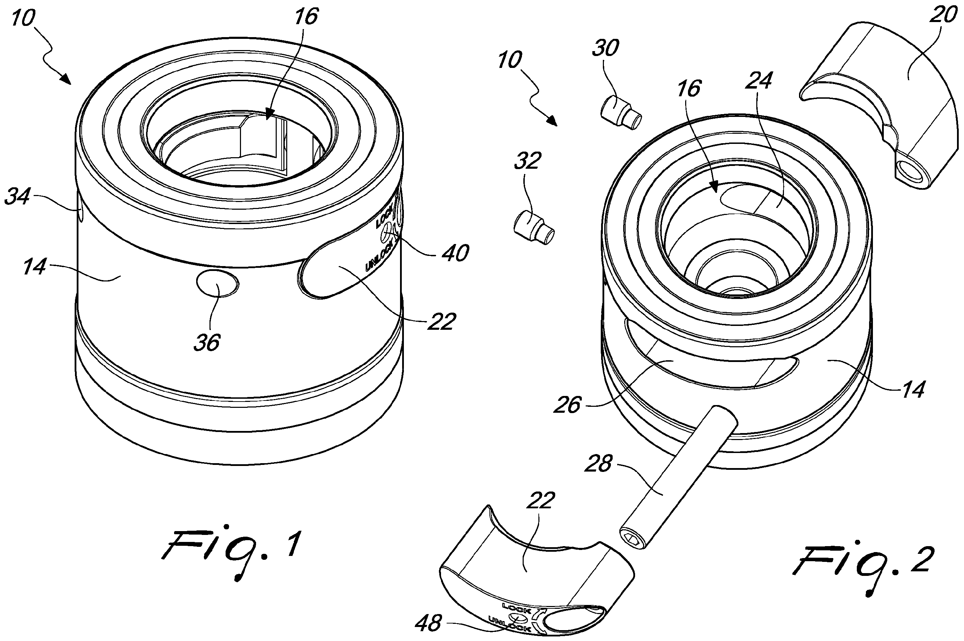

With particular reference to Figures 2, 12 and 13, the retention means according to the invention comprise two claws 20, 22 with curved profiles with opposing concavities, which are inserted so that they can slide in two respective mutually opposite slots 24, 26 of the support 14 in order to translate between an open position, in which they do not interfere with the insertion/extraction of the pin 12, and a closed position, in which they engage the groove 18 of the pin 12 that has been inserted into the support 14, in opposing positions, and they are functionally interconnected in an opening/closing relationship by an actuation screw 28 which is positioned so as not to interfere with the pin 12 and has at least one threaded end 28L which engages a corresponding threaded hole 20L provided in one of the claws 20.

The actuation screw 28 passes through a passage 29 provided in the support 14 at right angles to the axis A, in such a position as to not interfere with the axial cavity 16.

Preferably, the other end 28R of the actuation screw 28 is also threaded but in the direction opposite to the first end, and engages a corresponding threaded hole 22R of the other claw 22. In this manner, the rotation of the actuation screw 28 in one direction or in the other simultaneously produces the approach/distancing of both claws 20, 22, so as to halve the locking/release times.

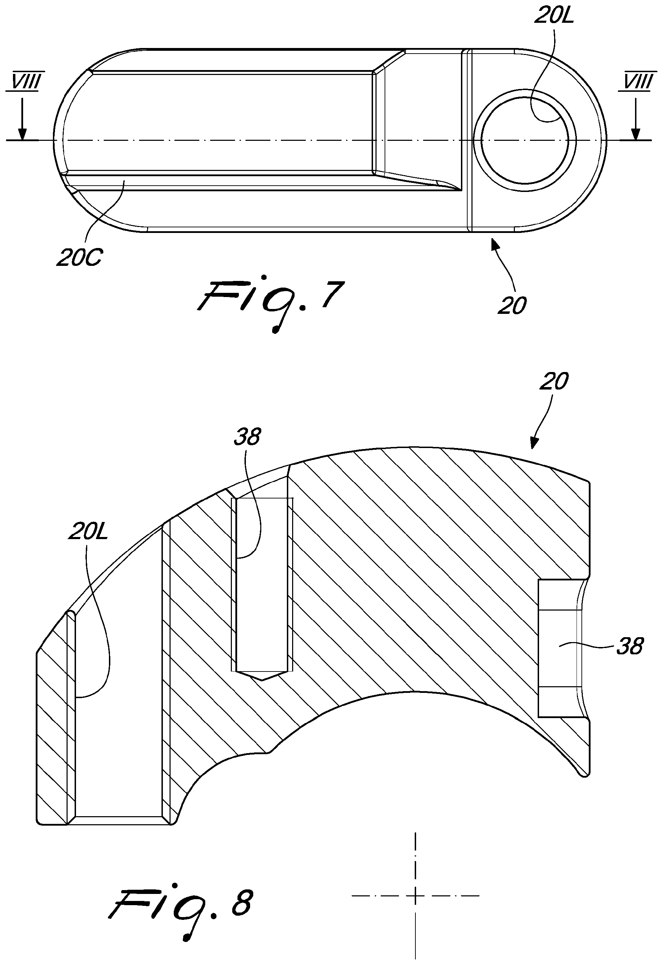

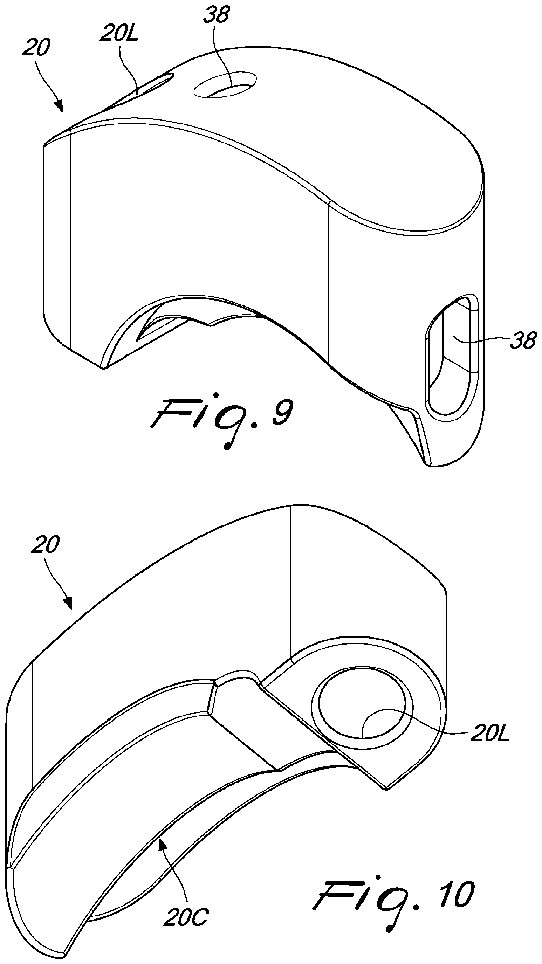

As illustrated in detail in Figures 7-10 and 13, the two claws 20, 22 engage the groove 18 of the pin 12 with respective frustum-shaped internal edges 20C, 22C, in the manner that will be described in more detail below.

As illustrated in detail in Figure 13, the pin 12 has a base 12' designed to abut against the workpiece W. A cylindrical raised portion 12S rises centrally from the base 12' and engages a corresponding cylindrical seat WS in the workpiece W at the mouth of the threaded hole H.

The pin 12 has a frustum-shaped portion 12C adjacent to the base 12', which is adapted to engage a corresponding frustum-shaped inlet 16C of the axial cavity 16 for centering purposes.

The groove 18 is delimited in a lower region, that is to say, on the side of the free end of the pin 12 opposite from the base 12', by a frustum-shaped annular wall 18C which, when the workpiece W is locked in place, is engaged by the frustum-shaped internal edges 20C, 22C of the claws 20, 22.

With particular reference to Figure 8, the frustum-shaped internal edges 20C, 22C have an angular extension, at the smallest diameter, which is preferably comprised between 60° and 120°, more preferably approximately 90°, so that the two claws 20, 22 together engage the frustum-shaped annular wall 18C on a minimum arc of 180°. The actuation screw 28 engages respective extensions of the claws 20, 22 which extend beyond the frustum-shaped internal edges 20C, 22C, therefore outside the region of interference with the pin 12.

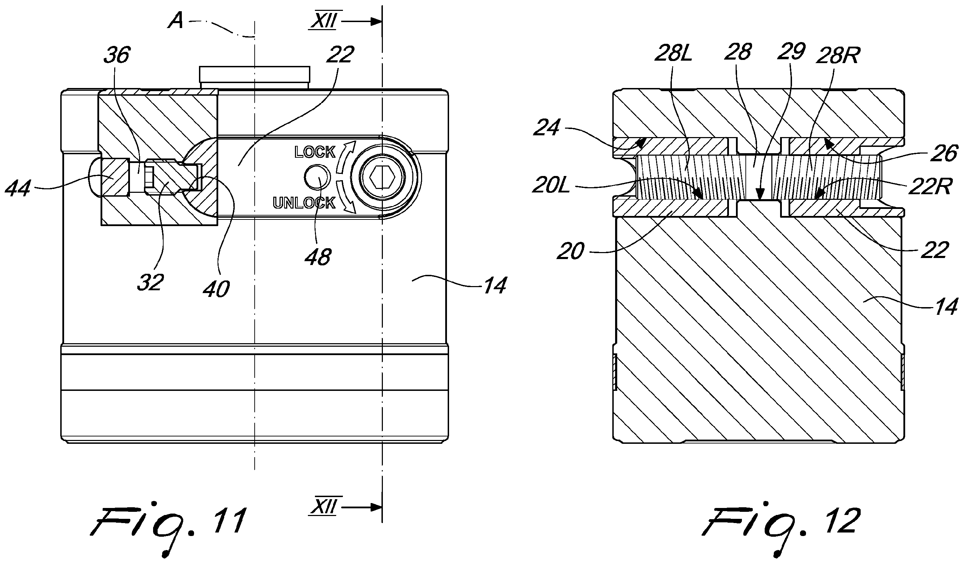

With particular reference now to Figures 2, 6, 8, 9 and 11, the travel of the two claws 20, 22 is delimited in both directions by two respective grub screws 30, 32, which are screwed into respective threaded passages 34, 36 of the support 14 at right angles to the axis of the actuation screw 28, and which engage two respective elongated slits 38, 40 which are provided in the claws 20, 22. The grub screws 30, 32, by abutting against the opposing ends of the elongated slits 38, 40, delimit the opening/closing travel of the claws 20, 22. The threaded passages 34, 36 are advantageously closed by respective plugs such as 44 (Figure 11).

The claws 20, 22 are also provided with respective service holes 46, 48 in order to facilitate their extraction from the respective slots 24, 26 during maintenance, assembly, and the like.

In operation, in a manner that is conventional per se, once the number of locking devices 10 necessary has been established together with their positions, for each one a threaded hole H is created in the workpiece W and a pin 12 is fixed thereto by way of the first screw S1. Also in a conventional manner, the support 14 is fixed to one of the threaded openings O of the platform P with the second screw S2.

At this point, with the claws 20, 22 in the open configuration, in which they leave the axial cavity substantially free, the workpiece W is placed on the supports 14 fixed to the platform P, inserting the pins 12 into the axial cavities 16.

After this, the locking devices 10 are tightened by rotating the actuation screw 28 in the direction to close the claws 20, 22 on the pin 12. The frustum-shaped internal edges 20C, 22C of the claws 20, 22 engage the frustum-shaped annular wall 18C of the groove 18 so as to axially bias the pin 12 toward the inside of the cylindrical support 14, with the frustum-shaped portion 12C engaging the frustum-shaped inlet 16C and thus ensuring perfect centering (Figure 13).

As illustrated in Figure 13, the inner faces of the claws 20, 22 do not come into contact with the groove 18. In this manner, the closing clamping action carried out by the claws 20, 22 does not interfere with the centering action which, as mentioned above, is determined by the coupling between the frustum-shaped portion 12C of the pin 12 and the frustum-shaped inlet 16C of the cavity 16.

In practice it has also been found that the invention fully achieves the set aims.

In particular, since the locking device is composed of a small number of parts that have a relatively solid structure, it is extremely strong and reliable, as well as being relatively cheap to make.

The clamping mechanism constituted by the actuation screw 28 directly engaging the two claws 20, 22, in addition to being strong and resistant to wear, influences neither the diameter of the support 14 nor the diameter of the axial cavity, therefore making it possible to maximize the diameter of the pin 12 without needing to excessively dimension the outside diameter of the support.

The two claws 20, 22 with curved profiles, by engaging an ample frustum-shaped surface of the groove 18 of the pin 12 with their frustum-shaped internal edges 20C, 22C, is capable of exerting a very high retaining force without risk of yielding.

The double threading on the actuation screw 28 makes it possible to manually lock/release the workpiece W extremely rapidly, to the advantage of productivity.

A preferred embodiment of the invention has been described, but obviously the person skilled in the art may perform various modifications and variations within the scope of protection of the claims.

For example, although the double threading on the actuation screw makes it possible to accelerate the locking/release of the device, if timing is not a critical factor then the actuation screw could be provided with a single threading which acts on one of the claws, and simply be pivoted to the other claw in a relationship of thrust/traction.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A locking device for workpieces (W) that are adapted to be machined on machine tools, which comprises a support (14) extending about an axis (A), which has an axial cavity (16), adapted to receive a pin (12) fixed to the workpiece (W), and has retention means for retaining said pin (12) axially, said retention means comprising two claws (20, 22) which are inserted so that they can slide in two respective mutually opposite slots (24, 26) of the support (14) in order to translate between an open position, in which they do not interfere with the insertion/extraction of the pin (12), and a closed position, in which they are adapted to engage a circumferential groove (18) of the pin (12) that has been inserted into the support (14), in opposing positions, and they are functionally interconnected in an opening/closing relationship by an actuation screw (28) which is positioned so as not to interfere with the pin (12) and has at least one first threaded end (28L) which engages a corresponding threaded hole (20L) provided in one of the claws (20), **characterized in that** said two claws (20, 22) have curved profiles with opposite concavities, and **in that** said actuation screw (28) passes through a passage (29) provided in said support (14) at right angles to the axis (A), in such a position as not to interfere with the axial cavity (16).

2. The device according to claim 1, **characterized in that** said actuation screw (28) has a second end (28R) which is threaded in the opposite direction with respect to the first end and engages a correspondingly threaded hole (22R) of the other claw (22).

3. The locking device according to claim 1 or 2, **characterized in that** said two claws (20, 22) have respective frustum-shaped internal edges (20C, 22C) with which they engage a frustum-shaped annular wall (18C) of said groove (18) in opposing positions.

4. The locking device according to claim 3, **characterized in that** said frustum-shaped internal edges (20C, 22C) have an angular extension, at the smallest diameter, which is preferably comprised between 60° and 120°.

5. The locking device according to claim 4, **characterized in that** said frustum-shaped internal edges (20C, 22C) have an angular extension, at the smallest diameter, which is substantially 90°.

6. The locking device according to claim 4 or 5, **characterized in that** said actuation screw (28) engages respective extensions of the claws (20, 22) which extend beyond said frustum-shaped internal edges (20C, 22C).

7. The locking device according to one of claims 1-6, **characterized in that** said axial cavity (16) has a frustum-shaped inlet (16C) which is adapted to be engaged by a frustum-shaped portion (12C) of said pin (12) for centering purposes.

8. The locking device according to one or more of claims 1-7, **characterized in that** the travel of said two claws (20, 22) is delimited in both directions by two respective grub screws (30, 32) which are screwed into the support (14) at right angles to the axis of the actuation screw (28) and which engage two respective elongated slits (38, 40) which are provided in the claws (20, 22).

## Patentansprüche

1. Eine Verriegelungsvorrichtung für Werkstücke (W), die zur Bearbeitung auf Werkzeugmaschinen angepasst sind, welche eine Halterung (14) umfasst, die sich um eine Achse (A) erstreckt und einen axialen Hohlraum (16) hat, ausgebildet, um einen am Werkstück (W) befestigten Stift (12) aufzunehmen, und Haltemittel, um den Stift (12) axial zu halten; wobei die Haltemittel zwei Backen (20, 22) umfassen, die so in zwei entsprechende einander gegenüberliegende Schlitze (24, 26) der Halterung (14) eingesetzt sind, dass sie gleiten können, um eine Translationsbewegung zwischen einer offenen Position, in welcher sie das Einsetzen/Herausziehen des Stifts (12) nicht behindern, und einer geschlossenen Position durchzuführen, in welcher sie ausgebildet sind, um in eine Umfangsnut (18) des Stifts (12) einzugreifen, der in die Halterung (14) eingesetzt wurde, in gegenüberliegenden Positionen, und sie sind funktionell in einer Öffnungs-/Schließbeziehung durch eine Betätigungsschraube (28) miteinander verbunden, die so positioniert ist, dass sie den Stift (12) nicht behindert, und mindestens ein erstes Gewindeende (28L) hat, das in ein entsprechendes Gewindeloch (20L) eingreift, welches in einer der Backen (20) angebracht ist; **dadurch gekennzeichnet, dass** die zwei Backen (20, 22) gekrümmte Profile mit entgegengesetzten Konkavitäten haben, und dadurch, dass die Betätigungsschraube (28) durch einen Durchlass (29) verläuft, der in der Halterung (14) in rechten Winkeln zur Achse (A) angebracht ist, in einer Position, um den axialen Hohlraum (16) nicht zu blockieren.

2. Die Vorrichtung gemäß Anspruch 1, **dadurch gekennzeichnet, dass** die Betätigungsschraube (28) ein zweites Ende (28R) hat, welches mit einem Gewinde in die dem ersten Ende entgegengesetzte Richtung versehen ist und in ein entsprechendes Gewindeloch (22R) der anderen Backe (22) eingreift.

3. Die Verriegelungsvorrichtung gemäß Anspruch 1 oder 2, **dadurch gekennzeichnet, dass** die zwei Backen (20, 22) entsprechende stumpfförmige Innenkanten (20C, 22C) haben, mit denen sie in gegenüberliegenden Positionen mit einer stumpfförmigen Ringwand (18C) der Nut (18) in Eingriff stehen.

4. Die Verriegelungsvorrichtung gemäß Anspruch 3, **dadurch gekennzeichnet, dass** die stumpfförmigen Innenkanten (20C, 22C) eine Winkelerstreckung am kleinsten Durchmesser haben, die vorzugsweise zwischen 60° und 120° umfasst.

5. Die Verriegelungsvorrichtung gemäß Anspruch 4, **dadurch gekennzeichnet, dass** die stumpfförmigen Innenkanten (20C, 22C) eine Winkelerstreckung am kleinsten Durchmesser haben, die im Wesentlichen 90° beträgt.

6. Die Verriegelungsvorrichtung gemäß Anspruch 4 oder 5, **dadurch gekennzeichnet, dass** die Betätigungsschraube (28) in entsprechende Verlängerungen der Backen (20, 22) eingreift, die sich über die stumpfförmigen Innenkanten (20C, 22C) hinaus erstrecken.

7. Die Verriegelungsvorrichtung gemäß einem der Ansprüche 1-6, **dadurch gekennzeichnet, dass** der axiale Hohlraum (16) einen stumpfförmigen Einlass (16C) hat, der ausgebildet ist, um für Zentrierungszwecke mit einem stumpfförmigen Abschnitt (12C) des Stifts (12) in Eingriff zu stehen.

8. Die Verriegelungsvorrichtung gemäß einem oder mehreren der Ansprüche 1-7, **dadurch gekennzeichnet, dass** der Weg der beiden Backen (20, 22) in beide Richtungen durch zwei entsprechende Gewindestifte (30, 32) begrenzt ist, die in rechten Winkeln zur Achse des Betätigungsschraube (28) in die Halterung (14) eingeschraubt werden und in zwei dazugehörige Längsschlitze (38, 40) eingreifen, die in den Backen (20, 22) angebracht sind.

## Revendications

1. Dispositif de verrouillage pour des pièces (W) qui sont conçues pour être usinées sur des machines-outils, qui comprend un support (14) s'étendant autour d'un axe (A), qui comporte une cavité axiale (16), conçue pour recevoir un plot (12) sur la pièce (W), et comporte des moyens de retenue pour maintenir axialement ledit plot (12), les moyens de retenue comprenant deux mors (20, 22), qui sont insérés de telle manière qu'ils peuvent coulisser dans deux fentes (24, 26) mutuellement opposées respectives du support (14) afin de translater entre une position ouverte, dans laquelle ils n'interfèrent pas avec l'insertion/extraction dudit plot (12), et une position fermée, dans laquelle ils sont adaptés pour venir en prise avec une rainure circonférentielle (18) du plot (12) qui a été inséré dans le support (14), dans des positions opposées, et ils sont interconnectés fonctionnellement dans une relation d'ouverture/fermeture par une vis d'actionnement (28) qui est positionnée de façon à ne pas interférer avec le plot (12) et comporte au moins une première extrémité filetée (28L) qui vient en prise avec un trou fileté (20L) correspondant pratiqué dans un des mors (20), **caractérisé en ce que** lesdits deux mors (20, 22) ont des profils courbés avec des concavités opposées, et **en ce que** ladite vis d'actionnement (28) passe à travers un passage (29) pratiqué dans ledit support (14) à angle droit par rapport à l'axe (A), dans une position de façon à ne pas interférer avec la cavité axiale (16).

2. Dispositif de verrouillage selon la revendication 1, **caractérisé en ce que** ladite vis d'actionnement (28) comporte une seconde extrémité (28R) qui est filetée dans la direction opposée par rapport à la première extrémité et vient en prise avec un trou fileté de manière correspondante (22R) de l'autre mors (22).

3. Dispositif de verrouillage selon la revendication 1 ou 2, **caractérisé en ce que** lesdits deux mors (20, 22) ont respectivement des bords intérieurs (20C, 22C) de forme tronconique avec lesquels ils viennent en prise avec une paroi annulaire (18C) de forme tronconique de ladite rainure (18) dans des positions opposées.

4. Dispositif de verrouillage selon la revendication 3, **caractérisé en ce que** lesdits bords intérieurs (20C, 22C) de forme tronconique ont une extension angulaire, au plus petit diamètre, qui est de préférence comprise entre 60° et 120°.

5. Dispositif de verrouillage selon la revendication 4, **caractérisé en ce que** lesdits bords intérieurs (20C, 22C) de forme tronconique ont une extension angulaire, au plus petit diamètre, qui est sensiblement de 90°.

6. Dispositif de verrouillage selon la revendication 4 ou 5, **caractérisé en ce que** ladite vis d'actionnement (28) vient en prise avec des extensions respectives des mors (20, 22) qui s'étendent au-delà des bords intérieurs (20C, 22C) de forme tronconique.

7. Dispositif de verrouillage selon l'une des revendications 1- 6, **caractérisé en ce que** ladite cavité axiale (16) comporte un orifice d'entrée (16C) de forme tronconique qui est conçu pour une partie de forme tronconique (12C) dudit plot (12) vienne en prise avec lui pour des besoins de centrage.

8. Dispositif de verrouillage selon l'une ou plusieurs des revendications 1- 7, **caractérisé en ce que** le déplacement desdits deux mors (20, 22) est délimité dans les deux directions par deux vis sans tête (30, 32) respectives qui sont vissées dans le support (14) à angle droit par rapport à l'axe de la vis d'actionnement (28) et qui viennent en prise avec deux fentes allongées (38, 40) respectives qui sont pratiquées dans les mors (20, 22).
